# EUROPÄISCHE PATENTSCHRIFT

(11) **EP 3 957 939 B1**
(45) Veröffentlichungstag und Bekanntmachung des Hinweises auf die Patenterteilung: **20.09.2023**
(21) Anmeldenummer: 20000300.2
(22) Anmeldetag: 20.08.2020
(51) Int. Cl.: F27B 14/02, F27B 14/04, F27B 14/08, F27B 14/12, F27D 17/00, F27D 21/00, F27D 21/02

(54) **ANLAGE ZUM RECYCELN VON KONTAMINIERTEM METALLSCHROTT**
ASSEMBLY FOR RECYCLING CONTAMINATED METAL SCRAP
INSTALLATION DE RECYCLAGE DE FERRAILLE CONTAMINÉE

(43) Veröffentlichungstag der Anmeldung: 23.02.2022
(73) Patentinhaber: ABP Induction Systems GmbH, 44147 Dortmund (DE)
(72) Erfinder: LINDECKE, Christian, 44139 Dortmund (DE)
(74) Vertreter: Hauck Patentanwaltspartnerschaft mbB

(56) Entgegenhaltungen:
- WO-A1-2014/071846
- CN-A- 110 873 530
- DE-A1-102010 034 571
- DE-C2- 1 201 954
- JP-A- H07 180 971

## Beschreibung

Die vorliegende Erfindung betrifft eine Anlage zum Recyceln von kontaminiertem Metallschrott, insbesondere asbesthaltigem Metallschrott.

Aus der EP 3 089 829 B1 ist ein Verfahren zur Wiederverwertung von asbesthaltigem Stahlschrott bekannt. Hierbei wird der Stahlschrott in einem luftdichten Behälter zu einer Anlage transportiert, mit der entsprechende Schmelzschritte durchgeführt werden können. Man lässt hierbei den Stahlschrott vollständig in eine Schmelze aus geschmolzenem Stahl eintauchen, wobei der Asbest in nichtkristallines Material umgewandelt wird, das sich in dem Stahl löst und/oder sich in der Schlacke ansammelt. Nach Abkühlung des geschmolzenen Stahles entsteht ein homogenes Stahlschrottprodukt, das im Wesentlichen asbestfrei ist. Die entsprechenden Schritte werden in einem Raum durchgeführt, der von der Umgebung abgedichtet ist auf eine im Wesentlichen gasdichte Weise, die durch Aufrechterhalten des Raumes unter einem unteratmosphärischen Druck erzeugt wird.

JP H 07180971 A und CN 110873530 A betreffen beide einen kippbaren Schmelzofen, der von einem einen Deckel aufweisenden Gehäuse umgeben ist.

DE 12 01 954 C2 beschreibt einen kippbaren Induktionsofen mit Deckel.

WO 2014/071846 A1 beschreibt einen Schmelzofen mit seitlich aufschwenkbaren Wartungstüren.

Wie erwähnt, ist in der vorstehend beschriebenen Veröffentlichung das entsprechende Recyclingverfahren beschrieben. Der vorliegenden Erfindung liegt nunmehr die Aufgabe zugrunde, eine Anlage zum Recyceln von asbesthaltigem Stahlschrott zu schaffen, die besonders sicher und effektiv arbeitet. Mit dieser Anlage soll insbesondere das vorstehend beschriebene Verfahren durchgeführt werden können.

Aus DE 10 2010 034 571 A1 ist Edelstahl-Saugkanal bekannt geworden. Für die Kopplung zwischen beweglichem und stationärem Teil des Absaugkanals ist ein Drehkranz vorgesehen. Ein beweglicher Absaugkanal aus widerstandsfähigem Material wird mit Abstand radial innerhalb des Drehkranzes vorbeigeführt und im stationären Teil des Absaugkanals frei auslaufen gelassen. Dadurch werden die Temperaturbelastungen und die chemische Belastung des Drehkranzes drastisch reduziert. Diese können aus weniger hochwertigem Material, beispielsweise normalem Stahl hergestellt werden. Zudem besitzt das Edelstahl-Abzugssystem zwei parallel zueinander angeordnete Schwenkachsen.

Aus CN 110873530 A ist ein energiesparender Induktionsofen mit einem Staubentsorger bekannt geworden. Vorgesehen sind mehrere Absaugkanäle, die gegenüber einem schwenkbaren Saugkanaldeckel 3 über eine Drehverbindung verbunden sind.

Diese Aufgabe wird erfindungsgemäß durch eine Anlage gemäß Patentanspruch 1 gelöst.

Vorzugsweise besitzt die Anlage eine Einrichtung zur Heranführung des kontaminierten Metallschrotts parallel zur Kippachse des Schmelzofens. Andererseits kann auch eine Einrichtung zur Heranführung des kontaminierten Metallschrotts senkrecht zur Kippachse des Schmelzofens vorgesehen sein. Das Gehäuse kann dabei eine einzige Tür oder zusätzlich eine zweite Tür umfassen. Bei der Anordnung von zwei Türen dient vorzugsweise eine Tür zur Einführung des kontaminierten Metallschrotts in den Schmelzofen, während die zweite Tür zum Abziehen der auf der Schmelze gebildeten Schlacke dient. Es kann aber auch nur eine einzige Tür vorgesehen sein, die zur Einführung des kontaminierten Metallschrotts in den Schmelzofen und ferner zum Abziehen der auf der Schmelze gebildeten Schlacke dient. Generell kann eine zweite Tür aber auch nur zur Durchführung von notwendigen Arbeiten, wie Kontrolle des Ofenraumes, Probennahme und Temperaturmessung der Schmelze, dienen.

Bei der Durchführung des entsprechenden Recyclingverfahrens kommt es darauf an, eine Kontamination der Umgebung mit beispielsweise Asbestpartikeln zu verhindern. Daher muss sichergestellt werden, dass sowohl bei der Zuführung des Metallschrottes zum Schmelzofen als auch während des Schmelzvorganges keine Partikel in die umgebende Atmosphäre eintreten können. Dies wird erfindungsgemäß durch die Anordnung eines haubenartigen Gehäuses oberhalb des eigentlichen Schmelzofens erreicht, in das der aufzubereitende Metallschrott eingeführt und von dort in den Schmelzofen eingebracht wird und von dem die während des Schmelzvorganges entstehenden Rauchgase abgezogen werden. Das haubenartige Gehäuse ist zusammen mit dem Schmelzofen kippbar angeordnet und hat mindestens eine Tür, vorzugsweise zwei Türen, wobei durch die erste Tür der asbesthaltige Stahlschrott eingeführt und durch die zweite Tür die auf der Schmelze gebildete Schlacke abgezogen wird. Die beim Schmelzvorgang entstandenen Rauchgase werden über das kanalartige Rauchgasabzugssystem abgezogen.

Das haubenartige Gehäuse ist insbesondere für eine kontinuierliche Innenraumtemperatur von etwa 1.200 °C ausgelegt und weist eine Einrichtung zur Temperatureinstellung auf, um auch die beim Chargiervorgang freigesetzten Asbestfasern zu zersetzen. Speziell ist der Innenraum gegenüber der Umgebung möglichst dicht abgeschottet, so dass sich nahezu gasdichte Verhältnisse ergeben. Hierdurch kann in der Anlage mit Unterdruck gearbeitet werden. Die in den Innenraum eindringende Umgebungsluftmenge, welche die Innenraumtemperatur absenken würde, wird auf diese Weise minimiert.

Die Anlage ist mit Einrichtungen versehen, mit denen der Schmelzofen mit haubenartigem Gehäuse zum Abschlacken rückwärts, d.h. entgegen der Richtung für den Abguss, gekippt werden kann. Entsprechende Einrichtungen sorgen für ein Verkippen des Ofens mit haubenartigem Gehäuse in die entgegengesetzte Richtung für den Abguss. Dabei ist sichergestellt, dass das vom haubenartigen Gehäuse ausgehende Rauchgasabzugssystem den entsprechenden Kippbewegungen des Schmelzofens folgt, so dass eine ununterbrochene Verbindung des haubenartigen Gehäuses mit dem Rauchabzugssystem gegeben ist.

Erfahrungsgemäß sind der Gasabführkanal und der Endkanal nicht mechanisch verbunden, jedoch ist der Endkanal mit einem eigenen bevorzugt hydraulisch betätigtem Antrieb ausgestattet, um der Bewegung des Gasabführkanals stets folgen zu können, damit sich die Rauchgasöffnungen beider Kanäle stets überlappen, so dass der Rauchgasstrom nicht unterbrochen wird. Die jeweiligen Positionen des Gasabführkanals und des Endkanals werden durch Sensoren erfasst. Ein elektronischer Regelkreis, welcher auf den besagten Antrieb wirkt, bewirkt, dass der Endkanal stets der Bewegung des Gasabführkanals folgt.

Der Gasabführkanal und der Endkanal sind daher nicht gelenkig miteinander verbunden. Anderenfalls würden die Gewichtskräfte des Endkanals die Gewichtsanzeige des Ofens, der auf Wägezellen steht, beeinflussen. Eine gelenkige Verbindung ist hingegen denkbar, wenn der Ofen keine Wägezellen aufweist und die besagte Beeinflussung somit nicht stattfinden kann.

Dabei mündet insbesondere der vom haubenartigen Gehäuse ausgehende Zwischenkanal in den oberen Endbereich des auf dem Deck befestigten Gasabführkanales, an dessen unterem Endbereich der Endkanal gelenkig gelagert ist. Ferner besitzt die Anlage vorzugsweise eine Einrichtung zur Aufnahme einer Gießform, in die eine Abstichrinne des Schmelzofens mündet. Beim Gießvorgang wird dabei der im Ofengestell angeordnete Schmelzofen gekippt, so dass sich die Abstichrinne bis zur Öffnung der Gießform, die von dieser Einrichtung getragen wird, erstreckt.

In Weiterbildung weist die Anlage eine Einrichtung zur Beaufschlagung des haubenartigen Gehäuses und des Rauchgasabzugssystems mit Unterdruck auf. Das mit der Anlage durchgeführte Verfahren, d.h. Einführen des asbesthaltigen Stahlschrottes, Eintauchen des Schrottes in ein bestehendes Schmelzbad, Schmelzen des Schrottes, Abziehen der Schlacke, Durchführen eines Abstiches, Abführen der Rauchgase, findet daher vorzugsweise unter Unterdruck statt, um zu verhindern, dass asbesthaltige Partikel in die umgebende Atmosphäre entweichen. Es versteht sich daher, dass die gesamte Anlage gasdicht ausgebildet ist und alle Bestandteile entsprechend isoliert sind, um Temperaturen im Bereich von etwa 1.200 °C auszuhalten.

Da der Chargiervorgang und der Schmelzprozess durch die abgeschottete Bauweise nicht mehr beobachtet werden können, ist vorzugsweise mindestens eine Kamera für die Innenraumbeobachtung vorgesehen. Dies bezieht sich sowohl auf den eigentlichen Schmelzofen als auch auf das haubenartige Gehäuse.

Das haubenartige Gehäuse ist zweckmäßigerweise über eine schnell lösbare Verbindung am Schmelzofendeck befestigt. Auf diese Weise kann beispielsweise ein Tiegel des Schmelzofens rasch ausgewechselt werden, ohne dass aufwendige Demontagearbeiten erforderlich sind. Hierbei wird vorzugsweise das Zwischenrohr vom haubenartigen Gehäuse gelöst und das Gehäuse entfernt, wonach der Tiegel ausgewechselt werden kann.

Wie bereits erwähnt, besitzt das haubenartige Gehäuse vorzugsweise zwei Türen zur Einführung des asbesthaltigen Schrottes und zum Abziehen der Schlacke und für Arbeiten am Ofen. Dabei ist das haubenartige Gehäuse in Weiterbildung mit einer Andockeinrichtung für eine Chargiermaschine an die Tür zur Einführung des kontaminierten Schrottes versehen. Diese Tür besitzt beispielsweise ein auf- und abbewegbares Verschlusselement, das über geeignete Kettentriebe bewegbar ist. Während des Öffnens der Tür (Aufwärtsbewegen des Verschlusselementes) bewegt sich die Chargiermaschine an die Andockeinrichtung und fördert den asbesthaltigen Schrott in das haubenartige Gehäuse und von oben in den Schmelzofen. Hierdurch wird die Gasdichtigkeit bei einem Befüllen des Ofens sichergestellt.

Beide Türen sind entsprechend isoliert.

Das Rauchgasabzugssystem umfasst insbesondere ein entsprechend ausgebildetes Rohrsystem, dessen Rohre vorzugsweise aus einzelnen Segmenten zusammengesetzt sind, wobei diese Segmente beispielsweise gasdicht miteinander verschraubt sind. So kann beispielsweise der Zwischenkanal ein aus drei Segmenten bestehendes Rohr umfassen, ebenso der Gasabzugskanal, während der Endkanal bzw. untere Kanal vorzugsweise vier Segmente aufweist, von denen die Endsegmente mit der Gelenkverbindung versehen sind. Vorzugsweise weist dabei der Endkanal im am Boden angeordneten unteren Endsegment eine seitliche Gasaustrittsöffnung auf. Das entsprechende Rauchgas kann dabei über diese Öffnung an eine geeignete Gasaufbereitungsanlage geführt werden.

Wie bereits erwähnt, kann beispielsweise der kontaminierte Metallschrott parallel zur Kippachse des Schmelzofens oder senkrecht zu dieser herangeführt werden. Bei einer Zuführung parallel zur Kippachse finden vorzugsweise die beiden erwähnten zwei Türen Verwendung, von denen eine zur Einführung des kontaminierten Metallschrotts in den Schmelzofen und die andere zum Abziehen der aus der Schmelze gebildeten Schlacke dient. Bei Heranführung des kontaminierten Metallschrotts senkrecht zur Kippachse des Schmelzofens kann eine einzige Tür Verwendung finden, die sowohl zur Einführung des kontaminierten Metallschrotts als auch zum Abziehen der Schlacke dient. Diese Türen können gleichzeitig auch für andere Zwecke verwendet werden, beispielsweise Probenentnahmen, Untersuchungen etc. Die Erfindung schließt aber nicht aus, dass auch mehr als zwei Türen vorhanden sind, die für die vorstehend genannten Zwecke verwendet werden.

Vorstehend wurde ferner erwähnt, dass das haubenartige Gehäuse mit Rauchgasabzugssystem vorzugsweise gasdicht ausgebildet ist. Das hier verwendete Wort "gasdicht" schließt natürlich nicht aus, dass keine 100%ige Gasdichtigkeit erreicht wird. Die Erfindung umfasst daher auch weniger gasdichte Ausführungen.

Der Endkanal wird vorzugsweise nur bei einem Ofen mit Rückwärtskippmöglichkeit zum Boden geführt und dabei durch das Rahmengestellt derart gelagert, dass sich die Achse für das Rückwärtskippen mit der durch das Rahmengestell gebildeten Achse deckt. Bei nicht rückwärtskippenden Öfen kann der bewegliche Endkanal überflüssig sein. Wenn er vorhanden ist, dann ist er feststehend und kann statt zum Boden auch waagerecht oder in Richtung einer Hallendecke geführt werden.

Wie erwähnt, besitzt die Anlage vorzugsweise eine Kamera für die Innenraumbeobachtung von Schmelzofen und haubenartigem Gehäuse. Dies schließt natürlich nicht aus, dass mehrere Kameras vorgesehen sind, insbesondere auch solche für die Außenbeobachtung.

Was die schnell lösbare Verbindung des haubenartigen Gehäuses am Schmelzofendeck anbetrifft, so wird vorzugsweise das haubenartige Gehäuse über das ISO Twist-Lock-Prinzip auf dem Ofendeck befestigt.

Des Weiteren kann vorzugsweise ein Behälter für die Aufnahme von Schlacke vorgesehen sein.

Es versteht sich, dass die vorgesehenen Türen vorzugsweise Spezialantriebe aufweisen, um ihre entsprechenden Funktionen zu erfüllen.

Es versteht sich ferner von selbst, dass entsprechende Bewegungssteuersysteme für das kanalartige Rauchgasabzugssystem vorgesehen sind, beispielsweise Komponenten der Folgesteuerung, wie Wegaufnehmer etc. Dies betrifft speziell den Fall, bei dem Gasabführkanal und Endkanal nicht miteinander verbunden sind und bei dem der Endkanal einen eigenen, bevorzugt hydraulischen, Antrieb besitzt, mit dem der Endkanal synchron zur Schmelzofenbewegung bewegbar ist.

Die Kameras werden aufgrund der Hitzeeinwirkung vorzugsweise gekühlt. Die Erfindung umfasst ferner den Einsatz der Kameras zur Temperaturmessung. Auch kann der Einsatz eines optischen Thermosensors vorgesehen sein.

Das kanalartige Rauchgasabzugssystem ist vorzugsweise thermisch isoliert.

Die Erfindung wird nachfolgend anhand eines Ausführungsbeispieles in Verbindung mit der Zeichnung im Einzelnen erläutert. Es zeigen:
- Figur 1: eine Ansicht einer Anlage zum Recyceln von asbesthaltigem Stahlschrott;
- Figur 2: eine Schnittansicht der Anlage;
- Figur 3: eine Ansicht der Anlage im Kippzustand zum Entschlacken;
- Figur 4: eine Ansicht der Anlage im Kippzustand zum Gießen;
- Figur 5: einen am Schmelzofen angebrachten Gasabführkanal des Rauchgasabzugssystems der Anlage;
- Figur 6: eine erste Ansicht des Endkanales des Rauchgasabzugssystems; und
- Figur 7: eine zweite Ansicht des Endkanales des Rauchgasabzugssystems.

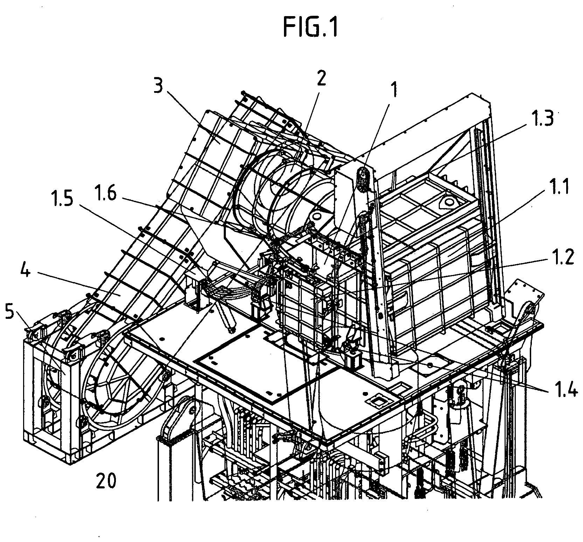

Die in Figur 1 gezeigte Anlage zum Recyceln von asbesthaltigem Stahlschrott weist als Hauptbestandteile ein Ofengestell 20, einen darin kippbar gelagerten Schmelzofen 21 und ein auf dem Deck des kippbaren Schmelzofens angeordnetes haubenartiges Gehäuse 1, ein sogenanntes Doghouse, auf. Dieses haubenartige Gehäuse 1 umgibt die obere SchmelzofenÖffnung (hier nicht gezeigt) und deckt diese ab. Ferner hat die Anlage ein mit dem haubenartigen Gehäuse 1 verbundenes Rauchgasabzugssystem, das später genauer erläutert wird.

Asbesthaltiger Schrott wird über eine geeignete Chargiermaschine über eine auf- und abbewegbare Chargiertür 1.1 in das haubenartige Gehäuse 1 und von dort in den Schmelzofen 21 eingeführt. Das diesbezügliche Verfahren zur Wiederverwertung des asbesthaltigen Stahlschrotts ist in der bereits erwähnten EP 3 089 829 B1 im Detail beschrieben. Mit der hier beschriebenen Anlage kann ein derartiges Verfahren durchgeführt werden.

Das haubenartige Gehäuse 1 hat zwei Türen, nämlich die bereits erwähnte Beschickungstür 1.1 und eine Entschlackungstür 1.2. Die Beschickungstür 1.1 wird über einen Kettentrieb 1.3 zum Öffnen und Schließen auf- und abbewegt. Die Entschlackungstür 1.2 wird manuell geöffnet und geschlossen, um die Schmelze zu entschlacken oder eine Temperaturmessung durchzuführen.

Das haubenartige Gehäuse 1 ist über vier schnell lösbare Verbindungen, z.B. nach dem Prinzip ISO Twist-Lock 1.4, auf dem Ofendeck befestigt. Mit diesen Verbindungen kann das Gehäuse schnell und einfach vom Ofendeck gelöst werden, um entsprechende Reparatur- oder Wartungsvorgänge durchführen zu können.

Eine Hochtemperaturkamera 1.6 ist an der Wand des Gehäuses 1 montiert.

Das mit dem haubenartigen Gehäuse 1 verbundene Rauchgasabzugssystem ist so ausgebildet, dass es sämtlichen Bewegungen des Schmelzofens 21, besonders dessen Kippbewegungen zum Gießen und Entschlacken, folgt. Es hat einen auf dem Ofendeck befestigten Gasabführkanal 3, der mit einem Zwischenkanal 2 verbunden ist, welcher mit dem haubenartigen Gehäuse 1 in Verbindung steht. Ferner folgt an den Gasabzugskanal 3 ein Endkanal 4, welcher gelenkig mit einem Rahmengestell 5 verbunden ist, das am Boden fixiert ist. Des Weiteren ist auf dem Ofendeck eine Energiezuführsäule 1.5 montiert, um das haubenartige Gehäuse 1 mit Energie zu versorgen.

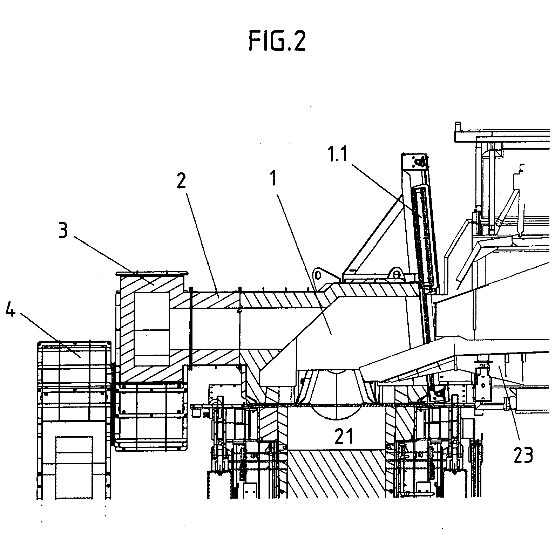

Figur 2 zeigt eine Schnittdarstellung einer Anlage zum Recyceln bei einem Beschickungsvorgang. Eine geeignete Chargiermaschine 23 führt asbesthaltigen Schrott bei geöffneter Chargiertür 1.1 in das haubenartige Gehäuse 1 und dort über die obere Öffnung des Schmelzofens 21 ein. Bei dem Schmelzofen kann es sich um einen geeigneten Induktionstiegelofen handeln. Die Anlage ist gasdicht ausgebildet, da sie mit Unterdruck betrieben wird, um ein Entweichen von asbesthaltigen Partikeln in die Umgebung zu verhindern. Ein entsprechendes Rauchgasabzugssystem sorgt für die Abführung der entstehenden Rauchgase zu einer geeigneten Verwertungsanlage. Dieses System weist das vom haubenartigen Gehäuse 1 ausgehende Zwischenrohr 2 und den fest am Schmelzofendeck angebrachten Gasabzugskanal 3 auf, welcher rauchgasseitig mit dem Endkanal 4 in Verbindung steht, der wiederum gelenkig im Rahmengestell 5 gelagert ist. Das Rauchgasabzugssystem ist so ausgebildet, dass es sämtlichen Bewegungen der Anlage folgen kann.

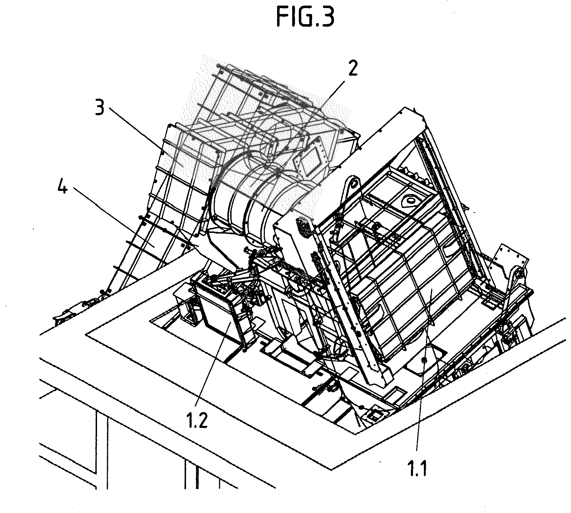

Figur 3 zeigt eine Ansicht der Anlage, bei der der Schmelzofen zum Entschlacken gekippt ist. Die Entschlackungstür 1.2 ist hierbei geöffnet, während die Chargiertür 1.1 geschlossen ist. Die entsprechende Kippbewegung wird vom Zwischenkanal 2 und vom Gasabzugskanal 3 mitgemacht, während der Endkanal 4 durch einen Hydraulikzylinder betätigt entsprechend mitbewegt wird.

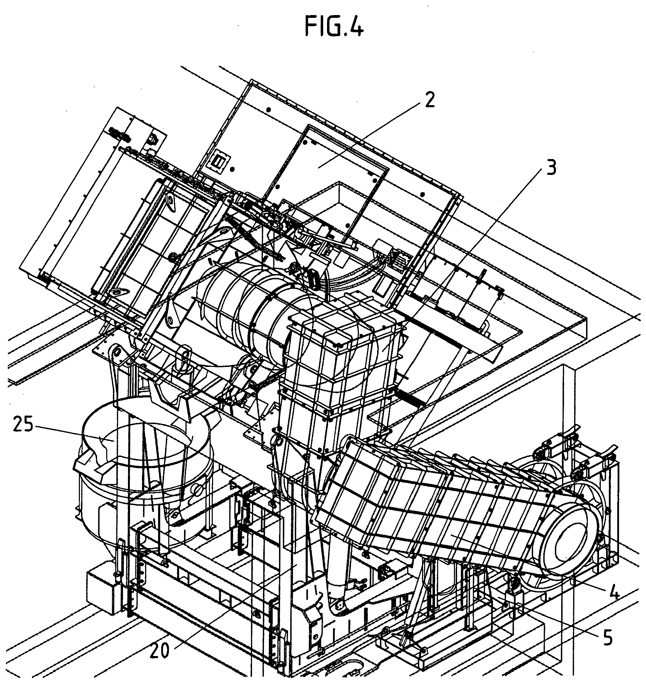

Figur 4 zeigt die Anlage in einem zum Entschlacken entgegengesetzten Kippzustand, in dem die Schmelze in eine Pfanne 25 vergossen wird.

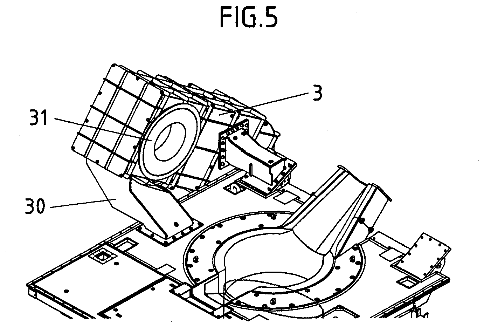

Figur 5 zeigt eine Ansicht des Gasabführkanales 4, der über einen Befestigungsarm 30 am Ofendeck fixiert ist und somit eine entsprechende Kippbewegung des Ofens mitmacht. Bei 31 ist der Anschluss an das Zwischenrohr 2, das zum haubenartigen Gehäuse 1 führt, dargestellt.

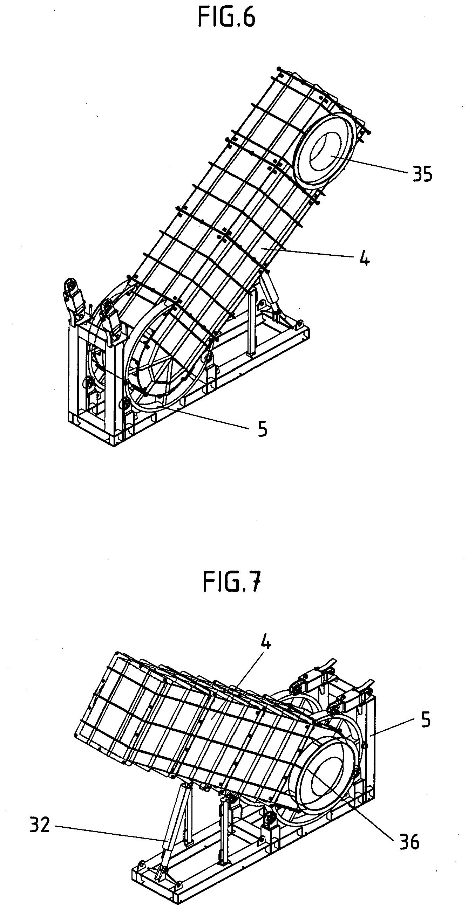

Die Figuren 6 und 7 zeigen zwei Ansichten des Endkanales 4, der rauchgasseitig mit dem Gasabzugskanal 3 verbunden ist, wie mit der entsprechenden Öffnung 35 gezeigt, als auch mit dem am Boden fixierten Rahmengestell 5. Eine Öffnung 36 dient zum Anschließen einer Leitung, die zu einer Rauchgasverwertungsstelle führt. Ferner zeigt Figur 7 einen Hydraulikzylinder 32, mit dem der Endkanal 4 den Bewegungen des Systems folgend angehoben oder abgesenkt werden kann.

## Patentansprüche

1. Anlage zum Recyceln von kontaminiertem, insbesondere asbesthaltigem, Metallschrott mit einem Ofengestell (20), einem darin angeordneten kippbaren Schmelzofen (21), der eine Gießvorrichtung zum Gießen einer im Schmelzofen (21) hergestellten Metallschmelze in eine Pfanne (25) umfasst, und einem auf dem Deck des kippbaren Schmelzofens (21) angeordneten haubenartigen Gehäuse (1), das die obere Schmelzofenöffnung umgibt und abdeckt und mindestens eine Tür (1.1, 1.2) und ein kanalartiges Rauchgasabzugssystem aufweist, das sich gasdicht vom haubenartigen Gehäuse (1) aus erstreckt und so ausgebildet ist, dass es allen Kippbewegungen des Schmelzofens (21) folgt, wobei das kanalartige Rauchgasabzugssystem einen auf dem Deck des Schmelzofens (21) befestigten Gasabführkanal (3) sowie einen Endkanal (4) umfasst, wobei Gasabführkanal (3) und Endkanal (4) nicht miteinander verbunden sind und wobei der Endkanal (4) einen eigenen, bevorzugt hydraulischen, Antrieb (32) besitzt, mit dem der Endkanal (4) synchron zur Schmelzofenbewegung bewegbar ist, so dass sich die Rauchgasöffnungen von Gasabführkanal (3) und Endkanal (4) stets überlappen, und ein elektronischer Regelkreis für den Antrieb vorgesehen ist, der bewirkt, dass der Endkanal stets der Bewegung des Gasabfuhrkanals folgt.

2. Anlage nach Anspruch 1, **dadurch gekennzeichnet, dass** sie eine Einrichtung zur Heranführung des kontaminierten Metallschrotts parallel zur Kippachse des Schmelzofens (21) aufweist.

3. Anlage nach Anspruch 1, **dadurch gekennzeichnet, dass** sie eine Einrichtung zur Heranführung des kontaminierten Metallschrotts senkrecht zur Kippachse des Schmelzofens (21) aufweist.

4. Anlage nach einem der Ansprüche 1 bis 3, **dadurch gekennzeichnet, dass** der Endkanal (4) in einem Rahmengestell (5) schwenkbar gelagert ist.

5. Anlage nach einem der Ansprüche 1 bis 4, **dadurch gekennzeichnet, dass** der Endkanal (4) nur bei einem Schmelzofen (21) mit Rückwärtskippmöglichkeit zum Boden der Anlage geführt wird und dabei durch ein Rahmengestell (5) derart gelagert ist, dass sich die Achse für das Rückwärtskippen mit der durch das Rahmengestell (5) gebildeten Achse deckt.

6. Anlage nach Anspruch 4 oder 5, **dadurch gekennzeichnet, dass** zwischen Endkanal (4) und Gasabzugskanal (3) sowie Rahmengestell (5) jeweils ein Drehgelenk angeordnet ist.

7. Anlage nach einem der Ansprüche 1 bis 6, **dadurch gekennzeichnet, dass** der vom haubenartigen Gehäuse (1) ausgehende Zwischenkanal (2) in den oberen Endbereich des auf dem Ofendeck befestigten Gasabführkanales (3) mündet, an dessen Endbereich der Endkanal (4) gelenkig gelagert ist.

8. Anlage nach einem der vorangehenden Ansprüche, **dadurch gekennzeichnet, dass** sie eine Einrichtung zur Aufnahme einer Pfanne (25) zur Aufnahme der Schmelze besitzt, in die eine Abstichrinne des Schmelzofens (21) mündet.

9. Anlage nach einem der vorangehenden Ansprüche, **dadurch gekennzeichnet, dass** sie eine Einrichtung zur Beaufschlagung des haubenartigen Gehäuses (1) und des Rauchgasabzugssystems mit Unterdruck umfasst.

10. Anlage nach einem der vorangehenden Ansprüche, **dadurch gekennzeichnet, dass** sie mindestens eine Kamera (1.6) für die Innenraumbeobachtung von Schmelzofen (21) und haubenartigem Gehäuse (1) und/oder zur Messung der Schmelztemperatur besitzt.

11. Anlage nach einem der vorangehenden Ansprüche, **dadurch gekennzeichnet, dass** das haubenartige Gehäuse (1) über eine schnell lösbare Verbindung, insbesondere über das ISO Twist-Lock-Prinzip (1.4), am Schmelzofendeck befestigt ist.

12. Anlage nach einem der vorangehenden Ansprüche, **dadurch gekennzeichnet, dass** das haubenartige Gehäuse (1) mit einer Andockeinrichtung für eine Chargiermaschine (23) an der Tür (1.1) zur Einführung des kontaminierten Metallschrotts versehen ist.

13. Anlage nach einem der vorangehenden Ansprüche, **dadurch gekennzeichnet, dass** das haubenartige Gehäuse (1) mit Rauchgasabzugssystem gasdicht ausgebildet ist.

14. Anlage nach einem der Ansprüche 1 bis 12, **dadurch gekennzeichnet, dass** das haubenartige Gehäuse (1) mit Rauchgasabzugssystem mit einer definierten Gasleckrate ausgebildet ist.

15. Anlage nach einem der vorangehenden Ansprüche, **dadurch gekennzeichnet, dass** sie einen Behälter für die Aufnahme von Schlacke umfasst.

## Claims

1. An assembly for recycling contaminated, in particular asbestos-containing, metal scrap comprising a furnace body (20), a melting furnace (21) which is tiltably arranged therein and which comprises a casting device for casting a molten metal produced in the melting furnace (21) into a ladle (25), and a hood-like housing (1) which is arranged on the deck of the tiltable melting furnace (21) and which surrounds and covers the upper melting furnace opening and comprises at least one door (1.1, 1.2) and a channel-like flue gas exhaust system which extends out of the hood-like housing (1) in a gas-tight manner and is designed such that it follows all tilting movements of the melting furnace (21), wherein the channel-like flue gas exhaust system comprises a gas discharge channel (3) fastened on the deck of the melting furnace (21) as well as an end channel (4), wherein the gas discharge channel (3) and the end channel (4) are not connected to one another and wherein the end channel (4) has its own, preferably hydraulic, drive (32) by means of which the end channel (4) can be moved synchronously with the melting furnace movement, such that the flue gas openings of the gas discharge channel (3) and end channel (4) always overlap, and an electronic control circuit is provided for the drive which causes the end channel to always follow the movement of the gas discharge channel.

2. The assembly according to claim 1, **characterized in that** it comprises an apparatus for bringing the contaminated metal scrap in parallel with the tilt axis of the melting furnace (21).

3. The assembly according to claim 1, **characterized in that** it comprises an apparatus for bringing the contaminated metal scrap perpendicular to the tilt axis of the melting furnace (21).

4. The assembly according to any one of claims 1 to 3, **characterized in that** the end channel (4) is pivotably mounted in a frame (5).

5. The assembly according to any one of claims 1 to 4, **characterized in that** the end channel (4) is only guided to the bottom of the assembly in the case of a melting furnace (21) with a backward tilting option and is mounted by means of a frame (5) in such a way that the axis for the backward tilting coincides with the axis formed by the frame (5).

6. The assembly according to claim 4 or 5, **characterized in that** a revolute joint is arranged in each case between the end channel (4) and the gas exhaust channel (3) as well as the frame (5).

7. The assembly according to any one of claims 1 to 6, **characterized in that** the intermediate channel (2) proceeding from the hood-like housing (1) leads into the upper end region of the gas discharge channel (3) fastened on the furnace deck, on the end region of which gas discharge channel the end channel (4) is mounted in an articulated manner.

8. The assembly according to any one of the preceding claims, **characterized in that** it has an apparatus for receiving a ladle (25) for receiving the molten material, into which a launder of the melting furnace (21) leads.

9. The assembly according to any one of the preceding claims, **characterized in that** it comprises an apparatus for applying negative pressure to the hood-like housing (1) and to the flue gas exhaust system.

10. The assembly according to any one of the preceding claims, **characterized in that** it has at least one camera (1.6) for monitoring the interior of the melting furnace (21) and hood-like housing (1) and/or for measuring the melting temperature.

11. The assembly according to any one of the preceding claims, **characterized in that** the hood-like housing (1) is fastened to the melting furnace deck via a quick-release connection, in particular via the ISO twist-lock principle (1.4).

12. The assembly according to any one of the preceding claims, **characterized in that** the hood-like housing (1) is provided with a docking apparatus for a charging machine (23) on the door (1.1) for introducing the contaminated metal scrap.

13. The assembly according to any one of the preceding claims, **characterized in that** the hood-like housing (1) with the flue gas exhaust system is designed to be gas-tight.

14. The assembly according to any one of claims 1 to 12, **characterized in that** the hood-like housing (1) with the flue gas exhaust system is designed to have a defined gas leakage rate.

15. The assembly according to any one of the preceding claims, **characterized in that** it comprises a container for receiving slag.

## Revendications

1. Installation pour le recyclage de ferraille contaminée, en particulier contenant de l'amiante, avec un bâti de four (20), un four de fusion basculable (21) y étant disposé, lequel comprend un dispositif de coulée pour couler dans une poche (25) un métal en fusion fabriqué dans le four de fusion (21), et un boîtier (1) de type hotte disposé sur le pont du four de fusion (21) basculable, lequel entoure et recouvre l'ouverture du four de fusion supérieure et présente au moins une porte (1.1, 1.2) et un système d'évacuation de fumée de type canal, lequel s'étend de façon étanche aux gaz à partir du boîtier de type hotte (1) et est conçu de telle sorte qu'il suit tous les mouvements de bascule du four de fusion (21), le système d'évacuation de fumée de type canal comprenant un canal d'évacuation de gaz (3) fixé sur le pont du four de fusion (21) ainsi qu'un canal de fin (4), le canal d'évacuation de gaz (3) et le canal de fin (4) n'étant pas raccordés l'un avec l'autre et le canal de fin (4) possédant un entraînement (32) propre, de préférence hydraulique, avec lequel le canal de fin (4) est déplaçable de façon synchronisée au mouvement du four de fusion de telle sorte que les ouvertures de gaz de fumée du canal d'évacuation de gaz (3) et du canal de fin (4) coïncident toujours, et un circuit de régulation électronique étant prévu pour l'entraînement, lequel a pour effet que le canal de fin suit toujours le mouvement du canal d'évacuation de gaz.

2. Installation selon la revendication 1, **caractérisée en ce qu'**elle présente un dispositif pour l'amenée de la ferraille contaminée parallèlement à l'axe de basculement du four de fusion (21).

3. Installation selon la revendication 1, **caractérisée en ce qu'**elle présente un dispositif pour l'amenée de la ferraille contaminée verticalement à l'axe de basculement du four de fusion (21).

4. Installation selon l'une des revendications 1 à 3, **caractérisée en ce que** le canal de fin (4) est monté de façon basculante dans un châssis (5).

5. Installation selon l'une des revendications 1 à 4, **caractérisée en ce que** le canal de fin (4) est mené jusqu'au sol de l'installation uniquement sur un four de fusion (21) avec possibilité de basculement arrière, et est monté par un châssis (5) de telle sorte que l'axe pour le basculement arrière coïncide avec l'axe formé par le châssis (5).

6. Installation selon la revendication 4 ou 5, **caractérisée en ce qu'**une articulation pivotante est disposée respectivement entre le canal de fin (4) et le canal d'évacuation de gaz (3) et le châssis (5).

7. Installation selon l'une des revendications 1 à 6, **caractérisée en ce que** le canal intermédiaire (2) partant du boîtier (1) de type hotte débouche dans la zone d'extrémité supérieure du canal d'évacuation de gaz (3) fixé sur le pont du four, sur la zone d'extrémité duquel le canal de fin (4) est monté de façon pivotante.

8. Installation selon l'une des revendications précédentes, **caractérisée en ce qu'**elle possède un dispositif pour l'accueil d'une poche (25) pour l'accueil du métal fondu, dans laquelle débouche un chenal de coulée du four de fusion (21).

9. Installation selon l'une des revendications précédentes, **caractérisée en ce qu'**elle comprend un dispositif pour l'application d'une dépression au boîtier (1) de type hotte et au système d'évacuation de fumée.

10. Installation selon l'une des revendications précédentes, **caractérisée en ce qu'**elle possède au moins une caméra (1.6) pour l'observation de l'espace intérieur du four de fusion (21) et du boîtier (1) de type hotte et/ou pour la mesure de la température de fusion.

11. Installation selon l'une des revendications précédentes, **caractérisée en ce que** le boîtier (1) de type hotte (1) est fixé sur le pont du four de fusion par une liaison rapidement détachable, en particulier par le principe ISO Twist-Lock (1.4).

12. Installation selon l'une des revendications précédentes, **caractérisée en ce que** le boîtier (1) de type hotte est muni d'un dispositif d'arrimage pour une machine de chargement (23) sur la porte (1.1) pour l'introduction de la ferraille contaminée.

13. Installation selon l'une des revendications précédentes, **caractérisée en ce que** le boîtier (1) de type hotte est conçu de façon étanche aux gaz, avec système d'évacuation de fumée.

14. Installation selon l'une des revendications 1 à 12, **caractérisée en ce que** le boîtier (1) de type hotte est conçu avec un taux de fuite de gaz défini, avec système d'évacuation de fumée.

15. Installation selon l'une des revendications précédentes, **caractérisée en ce qu'**elle comprend un récipient pour la réception de laitier.
